# EUROPEAN PATENT SPECIFICATION

(11) **EP 3 313 184 B1**
(45) Date of publication and mention of the grant of the patent: **17.04.2019**
(21) Application number: 16734120.5
(22) Date of filing: 21.06.2016
(51) Int. Cl.: A01N 33/20, A01N 35/02, A01N 43/50, A01N 43/88, A01P 1/00

(54) **MICROBICIDAL COMPOSITION**
MIKROBIZIDE ZUSAMMENSETZUNG
COMPOSITION MICROBICIDE

(30) Priority: 25.06.2015 US 201562184322 P
(43) Date of publication of application: 02.05.2018
(73) Proprietor: Rohm and Haas Company, Philadelphia, PA 19106 (US); Dow Global Technologies LLC, Midland, MI 48674 (US)
(72) Inventor: SINGLETON, Freddie L., Collegeville, PA 19426 (US); SIANAWATI, Emerentiana, Collegeville, PA 19426 (US); PAREEK, Kiran, Collegeville, PA 19426 (US); STRITTMATTER, Richard, Collegeville, PA 19426 (US)
(74) Representative: Houghton, Mark Phillip
(86) International application number: PCT/US2016/038459
(87) International publication number: WO 2016/209789

(56) References cited:
- WO-A1-03/013491
- WO-A1-2012/101051
- WO-A1-2015/051205
- WO-A2-2013/177258
- FR-A1- 2 262 998
- US-A1- 2010 305 132

## Description

This invention relates to microbicidal compositions containing 3,5-dimethyl-1,3,5-thiadiazinane-2-thione and dimethylol-dimethylhydantoin. DMDMH and Dazomet, among many other compounds, are disclosed in U.S. Patent No. 8,808,500 as aldehyde sources useful in controlling microbial growth in aqueous systems containing borohydride residues. WO2015051205 relates to synergistic microbiocidal compositions containing a nonionic surfactant and a formaldehyde adduct compound, in particular, dazomet, bronopol or a mixture of 4-(2-nitrobutyl)morpholine and 4,4'-(2-ethyl-2-nitrotrimethylene)dimorpholine (see p.15-23 for examples of dazomet combined to surfactants tested on A.niger, C.albicans, P.aeruginosa). WO03013491 discloses a combination of DMDMH and EDDS. WO2012101051 discloses a combination of DMDMH and chlorine. FR2262998 discloses paraformaldehyde and a 3,5-disubstituted 1,3,5-tetrahydrothiadiazinethiones with an improved (synergistic) microbicidal effect. However, these references do not suggest the particular combinations claimed herein, or their ratios, or suggest that these combinations might be synergistic. The problem addressed by this invention is to provide additional synergistic combinations of microbicides.

### STATEMENT OF THE INVENTION

The present invention is directed to a synergistic microbicidal composition comprising: (a) 3,5-dimethyl-1,3,5-thiadiazinane-2-thione; and (b) dimethylol-dimethylhydantoin; wherein a weight ratio of dimethylol-dimethylhydantoin to 3,5-dimethyl-1,3,5-thiadiazinane-2-thione is from 20:1 to 1:6.4.

### DETAILED DESCRIPTION OF THE INVENTION

As used herein, the following terms have the designated definitions, unless the context clearly indicates otherwise. The term "microbicide" refers to a compound capable of inhibiting the growth of or controlling the growth of microorganisms; microbicides include bactericides, fungicides and algaecides. The term "microorganism" includes, for example, fungi (such as yeast and mold), bacteria, archaea and algae. Unless otherwise specified, temperatures are in degrees centigrade (°C), references to percentages are percentages by weight (wt%) and amounts and ratios are on an active ingredient basis. Unless otherwise specified, all operations were performed at room temperature (20-25 °C). "Dazomet" is 3,5-dimethyl-1,3,5-thiadiazinane-2-thione (CAS No. 533-74-4). "DMDMH" is dimethylol-dimethylhydantoin (CAS No. 6440-58-0). Concentrations of each active used in assays detailed herein were based on the respective active ingredients in commercially available formulated products. Examples of commercially available products are as follows: Dazomet, available in a 24% active ingredient commercial formulation; and DMDMH, available as a 54% active ingredient commercial formulation.

Preferably, the weight ratio of DMDMH to Dazomet is from 20:1 to 1:2.4.

In a preferred embodiment of the invention, the composition comprises Dazomet and DMDMH.

Preferably, each of the synergistic microbicidal compositions is substantially free of microbicides other than DMDMH and Dazomet, i.e., it has less than 1 wt% of other microbicides based on total weight of active ingredients, preferably less than 0.5 wt%, preferably less than 0.2 wt%, preferably less than 0.1 wt%. Preferably, when a synergistic microbicidal composition is added to an aqueous medium, the medium is substantially free of other microbicides, i.e., it has less than 1 wt% of other microbicides based on total weight of active ingredients, preferably less than 0.5 wt%, preferably less than 0.2 wt%, preferably less than 0.1 wt%.

The compositions of this invention may contain other ingredients, e.g., defoamers and emulsifiers. The microbicidal compositions of the present invention can be used to inhibit the growth of microorganisms or higher forms of aquatic life (such as protozoans, invertebrates, bryozoans, dinoflagellates, crustaceans, mollusks, etc) by introducing a microbicidally effective amount of the compositions into an aqueous medium subject to microbial attack. Suitable aqueous media are found in, for example: industrial process water; electrocoat deposition systems; cooling towers; air washers; gas scrubbers; mineral slurries; wastewater treatment; ornamental fountains; reverse osmosis filtration; ultrafiltration; ballast water; evaporative condensers; heat exchangers; pulp and paper processing fluids and additives; starch; plastics; emulsions; dispersions; paints; latices; coatings, such as varnishes; construction products, such as mastics, caulks, and sealants; construction adhesives, such as ceramic adhesives, carpet backing adhesives, and laminating adhesives; industrial or consumer adhesives; photographic chemicals; printing fluids; household products, such as bathroom and kitchen cleaners; cosmetics; toiletries; shampoos; soaps; personal care products such as wipes, lotions, sunscreen, conditioners, creams, and other leave-on applications; detergents; industrial cleaners; floor polishes; laundry rinse water; metalworking fluids; conveyor lubricants; hydraulic fluids; leather and leather products; textiles; textile products; wood and wood products, such as plywood, chipboard, flakeboard, laminated beams, oriented strandboard, hardboard, and particleboard; petroleum processing fluids; fuel; oilfield fluids, such as injection water, fracture fluids, and drilling muds; agriculture adjuvant preservation; surfactant preservation; medical devices; diagnostic reagent preservation; food preservation, such as plastic or paper food wrap; food, beverage, and industrial process pasteurizers; toilet bowls; recreational water; pools; and spas.

The present invention is further directed to a method for inhibiting microbial growth in a medium by adding to the medium a synergistic composition as described herein. Preferably, the medium is substantially free of borohydride residues. Preferably, the medium is substantially free of oxidants.

The specific amount of the microbicidal compositions of this invention necessary to inhibit or control the growth of microorganisms in an application will vary. Typically, the amount of the composition of the present invention is sufficient to control the growth of microorganisms if it provides from 100 to 5,000 ppm (mg/L) active ingredients of the composition. It is preferred that the active ingredients be present in the medium to be treated in an amount of at least 200 ppm, preferably at least 300 ppm, preferably at least 400 ppm. It is preferred that the active ingredients of the composition be present in the medium to be treated in an amount of no more than 4,000 ppm, preferably no more than 3,000 ppm, preferably no more than 2,000 ppm, preferably no more than 1,000 ppm, preferably no more than 800 ppm, preferably no more than 700 ppm. In a method of this invention, a composition is treated to inhibit microbial growth by adding, together or separately, the two components of the synergistic composition, in amounts that would produce the concentrations indicated above.

### EXAMPLES

The synergism of the combination of the present invention was demonstrated by testing a wide range of concentrations and ratios of the compounds.

One measure of synergism is the industrially accepted method described by Kull, F. C.; Eisman, P. C.; Sylwestrowicz, H. D. and Mayer, R. L., in Applied Microbiology 9:538-541 (1961), using the ratio determined by the formula: Qₐ/Q_{A}+Q_{b}/Q_{B}=Synergy Index ("SI") wherein: Q_{A} =concentration of compound A (first component) in ppm, acting alone, which produced an end point (MIC of Compound A). Q_{A} =concentration of compound A in ppm, in the mixture, which produced an end point. Q_{B}=concentration of compound B (second component) in ppm, acting alone, which produced an end point (MIC of Compound B). Q_{b}=concentration of compound B in ppm, in the mixture, which produced an end point.

When the sum of Qₐ/Q_{A} and Q_{b}/Q_{B} is greater than one, antagonism is indicated. When the sum is equal to one, additivity is indicated, and when less than one, synergism is demonstrated. The lower the SI, the greater the synergy shown by that particular mixture. The minimum inhibitory concentration (MIC) of a microbicide is the lowest concentration tested under a specific set of conditions that prevents the growth of added microorganisms.

Synergy tests were conducted using standard microtiter plate assays with media designed for optimal growth of the test microorganism. Minimal salt medium supplemented with 0.2% glucose and 0.1% yeast extract (M9GY medium) was used for testing bacteria. In this method, a wide range of combinations of microbicides was tested by conducting high resolution MIC assays in the presence of various concentrations of DMDMH and Dazomet. High resolution MICs were determined by adding varying amounts of microbicide to one column of a microtiter plate and doing subsequent ten-fold dilutions using an automated liquid handling system to obtain a series of endpoints ranging from 2 ppm to 1,000 ppm active ingredient.

The synergy of the combinations of the present invention was determined against a consortium of selected bacterial species, *Escherichia coli* (ATCC #25922), *Pseudomonas aeruginosa* (ATCC #9027), *Staphylococcus aureus* (ATCC #6538) and *Klebsiella pneumoniae* (ATCC #13883). The consortium was prepared using approximately 1 x 10⁶ CFU per mL of each species. These microorganisms are representative of natural contaminants in many industrial applications. The plates were visually evaluated for microbial growth (turbidity) to determine the MIC after selected incubation times at 35° C after 24 hrs.

The test results for demonstration of synergy of between DMDMH and the Dazomet are shown below in Table 1. In each test, Second Component (B) was Dazomet and the First Component (A) was DMDMH. The following table shows the specific combinations of DMDMH and Dazomet that were synergistic as well as end-point activities (in ppm) measured by the MIC for Dazomet alone (Q_{B}) and DMDMH alone (Q_{A}), the calculated SI values, and the range of synergistic ratios for each synergistic combination tested (e.g., DMDMH/Dazomet or A/B. DMDMH was obtained as a 54% active formulation free of MDMH.

**Table 1. Results of synergy testing between DMDMH and Dazomet**

| DMDMH (mg/L) | Dazomet (mg/L) | S.I. | Ratio (DMDMH:Dazomet) (mg/L to mg/L) |
|---|---|---|---|
| 200 | - | - | - |
| 100 | 5 | 0.55 | 20:1 |
| 100 | 6 | 0.56 | 16.7:1 |
| 100 | 7 | 0.57 | 14.3:1 |
| 100 | 8 | 0.58 | 12.5:1 |
| 100 | 9 | 0.59 | 11.1:1 |
| 100 | 10 | 0.6 | 10:1 |
| 100 | 20 | 0.7 | 5:1 |
| 100 | 30 | 0.8 | 3.33:1 |
| 100 | 40 | 0.9 | 2.5:1 |
| 50 | 40 | 0.65 | 1.25:1 |
| 50 | 50 | 0.75 | 1:1 |
| 50 | 60 | 0.85 | 1:1.2 |
| 25 | 60 | 0.725 | 1:2.4 |
| 25 | 80 | 0.925 | 1:3.2 |
| 12.5 | 80 | 0.86 | 1:6.4 |
| 0 | 100 | - | - |

## Claims

1. A synergistic microbicidal composition comprising: (a) 3,5-dimethyl-1,3,5-thiadiazinane-2-thione; and (b) dimethylol-dimethylhydantoin; wherein a weight ratio of dimethylol-dimethylhydantoin to 3,5-dimethyl-1,3,5-thiadiazinane-2-thione is from 20:1 to 1:6.4.

2. The synergistic microbicidal composition of claim 1 in which a weight ratio of dimethylol-dimethylhydantoin to 3,5-dimethyl-1,3,5-thiadiazinane-2-thione is from 20:1 to 1:2.4.

3. A method for inhibiting microbial growth in a medium by adding to the medium a synergistic composition comprising: (a) 3,5-dimethyl-1,3,5-thiadiazinane-2-thione; and (b) dimethylol-dimethylhydantoin; wherein a weight ratio of dimethylol-dimethylhydantoin to 3,5-dimethyl-1,3,5-thiadiazinane-2-thione is from 20:1 to 1:6.4.

## Patentansprüche

1. Eine synergistische mikrobizide Zusammensetzung, die Folgendes beinhaltet: (a) 3,5-Dimethyl-1,3,5-thiadiazinan-2-thion; und (b) Dimethyloldimethylhydantoin; wobei ein Gewichtsverhältnis von Dimethyloldimethylhydantoin zu 3,5-Dimethyl-1,3,5-thiadiazinan-2-thion 20 : 1 bis 1 : 6,4 beträgt.

2. Synergistische mikrobizide Zusammensetzung gemäß Anspruch 1, bei der ein Gewichtsverhältnis von Dimethyloldimethylhydantoin zu 3,5-Dimethyl-1,3,5-thiadiazinan-2-thion 20 : 1 bis 1 : 2,4 beträgt.

3. Ein Verfahren zur Hemmung des mikrobiellen Wachstums in einem Medium durch Zugabe einer synergistischen Zusammensetzung zu dem Medium, die Folgendes beinhaltet: (a) 3,5-Dimethyl-1,3,5-thiadiazinan-2-thion; und (b) Dimethyloldimethylhydantoin; wobei ein Gewichtsverhältnis von Dimethyloldimethylhydantoin zu 3,5-Dimethyl-1,3,5-thiadiazinan-2-thion 20 : 1 bis 1 : 6,4 beträgt.

## Revendications

1. Une composition microbicide synergique comprenant : (a) de la 3,5-diméthyl-1,3,5-thiadiazinane-2-thione ; et (b) de la diméthylol-diméthylhydantoïne ; où un rapport en poids de la diméthylol-diméthylhydantoïne à la 3,5-diméthyl-1,3,5-thiadiazinane-2-thione va de 20/1 à 1/6,4.

2. La composition microbicide synergique de la revendication 1 dans laquelle un rapport en poids de la diméthylol-diméthylhydantoïne à la 3,5-diméthyl-1,3,5-thiadiazinane-2-thione va de 20/1 à 1/2,4.

3. Un procédé pour inhiber une croissance microbienne dans un milieu en ajoutant au milieu une composition synergique comprenant : (a) de la 3,5-diméthyl-1,3,5-thiadiazinane-2-thione ; et (b) de la diméthylol-diméthylhydantoïne ; où un rapport en poids de la diméthylol-diméthylhydantoïne à la 3,5-diméthyl-1,3,5-thiadiazinane-2-thione va de 20/1 à 1/6,4.
